# EUROPEAN PATENT APPLICATION

(11) **EP 3 985 560 A1**
(43) Date of publication of application: **20.04.2022**
(21) Application number: 20202071.5
(22) Date of filing: 15.10.2020
(51) Int. Cl.: G06K 9/62

(54) **METHODS AND SYSTEMS FOR DETERMINING CANDIDATE DATA SETS FOR LABELLING**

(71) Applicant: Aptiv Technologies Limited, St. Michael (BB)
(72) Inventor: MAOZ, Ori, 51427 Bergisch Gladbach (DE); DWORAK, Daniel, 33-100 Tarnów (PL); ARNOLD, Michael, 40210 Düsseldorf (DE); ROESE-KOERNER, Lutz, 42899 Remscheid (DE)
(74) Representative: Manitz Finsterwald Patent- und Rechtsanwaltspartnerschaft mbB

(57) **Abstract**

A computer implemented method for determining candidate data sets for labelling comprises the following steps carried out by computer hardware components: determining a plurality of sensor data sets; determining a respective signature for each of the plurality of sensor data sets; determining, based on the signature of the respective sensor data set, for each of the plurality of sensor data sets whether the respective sensor data set is a candidate data set for labelling; and providing the sensor data set to a labeling instance for labelling if the sensor data set is a candidate data set for labelling.

## Description

### FIELD

The present disclosure relates to methods and systems for determining candidate data sets for labelling.

### BACKGROUND

Machine learning methods may be very effective for automated perception and scene recognition, but may require large amounts of annotated (in other words: labelled) data to learn from. Scene annotation may essentially be a manual process.

Accordingly, there is a need to lower the time and cost of annotation.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining candidate data sets for labelling, the method comprising the following steps performed (in other words: carried out) by computer hardware components: determining a plurality of sensor data sets; determining a respective signature for each of the plurality of sensor data sets; determining, based on the signature of the respective sensor data set, for each of the plurality of sensor data sets whether the respective sensor data set is a candidate data set for labelling (which may also be referred to as annotating); and providing the sensor data set to a labeling instance for labelling if (for example if and only if) the sensor data set is a candidate data set for labelling.

In other words, the plurality of sensor data sets may be analyzed, and based on the analysis (which may include determining a signature for each of the sensor data sets), the sensor data sets which are considered to be most suitable for labelling may be determined.

Due to the large number of sensor data sets and the (manual) labor required for labelling of a sensor data set, only a limited number of sensor data sets may be labelled, and according to the method, the sensor data sets to be labelled (i.e. the candidates data sets for labelling) may be determined.

A signature of a sensor data set may be one or more numbers (for example a scalar or a vector) that resembles the sensor data set, wherein preferably similar sensor data sets have similar signatures (wherein similar sensor data sets does not necessarily mean that the sensor data itself is similar, but rather that the scene of which the sensor data set has been acquired is similar).

A signature may correspond either to a particular instance of sensor data (e.g. a camera image, or a LIDAR point cloud) or to a sequence of sensor data (e.g. a 3-second video clip). Signatures for sequences can either be generated directly from the data, or by aggregating multiple signatures of individual data samples. Examples of how signatures are aggregated include averaging them, concatenating them into a longer signature, or applying an additional machine-learning method (such as a dimensionality-reduction algorithm).

It will be understood that labelling may refer to assigning a label (for example "positive" or "negative") to a sensor data set. Also, it will be understood that more than two different labels may be provided (for example "showing a pedestrian", "showing a car", "showing a tree", or the like).

The method may be used for similarity-based computer assisted scene annotation.

According to another aspect, the signature of a candidate data set comprises numeric information of reduced size compared to the candidate data set.

A neural network (feed-forward or recurrent) may be trained to perform some inference task on the data to obtain the signature of the candidate set. Such a network may be used to generate signatures by taking the activity of one of its internal layers (for example a late layer) and applying dimensionality reduction to it. The representations of the layers in the neural networks gradually shift from low level representations (e.g. pixel values, radar channels, point reflections) in the inner layers to high level representations in the higher levels. These high level representations may be used as signatures. As long as the neural network is trained to solve a relevant task with reasonable performance, these higher level representations may provide separation in a more "semantic" context, and are thus suitable to be used in (or as) signatures.

According to another aspect, determining whether the respective sensor data set is a candidate data set comprises determining a similarity between the signature of the respective sensor data set and a signature of a labelled data set (i.e. a previously labelled or already labelled data set, wherein preferable the labelled data set is a positive). For example, the labelled data set may have been selected manually (i.e. by inspection by a human).

According to another aspect, it is determined whether the respective sensor data set is a candidate data set for labelling based on the similarity. It has been found that thus, sensor data sets which show desired scenes for labelling can be identified.

According to another aspect, it is determined whether the respective sensor data set is a candidate data set for labelling based on a machine learning method.

According to another aspect, the machine learning method comprises a regression model. For example, a linear regression model may be used.

According to another aspect, the machine learning method comprises an artificial neural network. It will be understood that there is a large variety of machine learning methods which may be applied to this purpose, and a neural network may only be a particular example. Among neural networks, for example a multi-layer perceptron (MLP) may be used.

According to another aspect, the machine learning method is trained (either) using signatures of positive sensor data sets, or trained using signatures of negative sensor data sets, or trained using signatures of positive sensor data sets and signatures of negative sensor data sets. For example, only positive sensor data sets may be used, or only negative sensor data sets may be used, or both positive sensor data sets and negative sensor data sets may be used. A "positive" sensor data set may be a sensor data set that, when labelled, is labelled (or annotated or classified) as belonging to a target class. A "negative" sensor data set may be a sensor data set that, when labelled, is labelled (or annotated or classified) as not belonging to the target class.

According to another aspect, the machine learning method is configured to select sensor data sets which are suspected to be labelled positive with a higher probability than sensor data sets which are suspected to be labelled negative. Usually, in a plurality of sensor data sets, the positive sensor data sets are more rare, and thus, it may be desired to ensure to have enough positive sensor data sets for labelling.

According to another aspect, the sensor data set may be image data (for example an image, for example a monochrome image, or for example a color image, or for example an image with distance information, for example acquired by a time of flight camera), radar data, lidar data, or a combination thereof. Based on the sensor data set, a dimensionally-reduced copy of embedding layer of an existing "trained" neural network in that domain may be used to obtain the signatures.

According to another aspect, labelling comprises classification, preferably classification into positives and negatives. A "positive" may belong to a target class, and a "negative" may not belong to the target class.

According to another aspect, labelling comprises providing for data for training of an artificial neural network. For training of the neural network, it may be required to provide a plurality of sensor data sets to the neural network, wherein each sensor data set is assigned a label (for example "positive" or "negative").

According to another aspect, labelling comprises manual labelling. For example, the scenes indicated by the sensor data sets may be so complex that only humans may reliably label the sensor data set.

In another aspect, the present disclosure is directed at a computer system, said computer system comprising a plurality of computer hardware components configured to carry out several or all steps of the computer implemented method described herein.

The computer system may comprise a plurality of computer hardware components (for example a processing unit, at least one memory unit and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of computer assisted labelling by proposing similar scenes according to various embodiments;
- Fig. 2: an illustration of computer assisted labelling by classifying signatures according to various embodiments;
- Fig. 3: a flow diagram illustrating a method for determining candidate data sets for labelling according to various embodiments;
- Fig. 4: a candidate determination system according to various embodiments; and
- Fig. 5: a computer system with a plurality of computer hardware components configured to carry out steps of a computer implemented method for determining candidate data sets for labelling according to various embodiments.

### DETAILED DESCRIPTION

Machine learning algorithms may be effective for automated perception and scene recognition, but may require large amounts of annotated data to learn from. Since scene annotation is essentially a manual process, it is desirable to lower the time and cost of annotation.

Approaches to lower annotation costs may fall into one of two categories:
(1) Automate parts of the annotation process, or propose initial guesses for annotations.
(2) Determine which parts of the data, when annotated, would provide the largest boost in the algorithm performance.

Approaches from the first category may be independent of the ML (machine learning) method used to train the data, and may tend to be more general.

Approaches from the second category, which may also be called Active Learning', may involve iteratively training an existing ML model and using its result to select additional data for training. These approaches may potentially yield better performance but may run the risk of requiring re-selection of annotated data if the ML model is significantly modified after the data annotation has already been completed.

According to various embodiments, methods and systems according to the first category may be provided.

According to various embodiments, a model-independent acceleration of the annotation process may be provided, which may be used to annotate data recorded from a sensor (for example a camera of a vehicle, or a radar or lidar sensor of a vehicle), but it may also be used in other contexts. The annotation process may be accelerated, where:
(a) it is desired to annotate scenes of a particular type, e.g. find all video segments where a pedestrian is crossing the street in front of the car; and
(b) where this type of scene is relatively rare (in other words: amongst the scenes, which may be represented by the sensor data sets, there are more scenes that are not of the particular type than there are scenes that are of the particular type). It will be understood that, in the context of classification, "being of a particular type" may be expressed as "being of a particular class".

Since machine learning algorithms rely on balanced datasets, rare scenes may require significant manual labor to collect enough relevant scenes for annotation. Various embodiments may reduce this labor by automatically preselecting data so that the relevant scenes are common within the preselection.

According to various embodiments, "signature" methods may be provided which reduce each scene (in other words: each sensor data set) into a numeric vector, in such a manner that similar scenes are assigned similar numeric values. There are several variations of these methods, capturing different aspects of similarity. The signature methods (or signature determination methods) may be provided for sequences of camera images or for other sensor modalities (for example for radar sensor data or for lidar sensor data). Scenes can be ranked by their similarity to a given scene by comparing these vectors, which may assist the navigation of large data repositories.

According to various embodiments, these scene annotations may be used to (automatically) determine which scenes should be annotated next, using the signatures.

Determination of the signatures for image similarity and using similarity for assisting scene annotation will be described in more detail in the following.

A plurality of sensor data sets may be provided, and for each of the sensor data sets, signatures may be determined using one of the following methods. Each sensor data set may for example be an image (for example acquired by a camera, for example provided on a vehicle), or a radar sensor data set or a lidar sensor data set.

According to various embodiments, the signatures may be determined by feeding the sensor data set (for example the image) through a pre-trained convolutional neural network, taking the activity of the embedding (second-to-last) layer and passing it through a dimensionality reduction method, e.g. Principal Component Analysis. The dimensionality reduced vector may serves as (in other words: may be) the signature of the sensor data set (for example the signature of the image, which may also be referred to as the image signature).

To find scenes similar to a given scene, some distance measure (for example Euclidic distance or Manhattan block distance) may be applied to the aggregated vectors and the vectors may then be ranked by this distance. The scenes with the lowest distance may be selected as similar.

According to various embodiments, the signature may be used to determined similarity.

According to various embodiments, similarity may be used for assisting scene annotation.

The signatures determined as described above may be used (or applied) to accelerate annotation of categorical data. Given a data collection of many scenes, and a category (or class), which may be referred to as class X, the user would like to annotate whether or not scenes (represented by sensor data sets) belong to category X. The vast majority of available scenes may not be of category X, so it may be important to preselect for annotation scenes that have a higher likelihood of belonging to X.

According to various embodiments, a plurality of initial sensor data sets (which may be referred to as "seed" sensor data sets) may be provided. For example, the user may select several "seed" sensor data sets (for example "seed" images), at least one of which belongs to X, and annotate each as either belonging or not belonging to X. Given these annotations, and given a signature precomputed for every scene in the data collection (i.e. in the plurality of sensor data sets from which sensor data sets for annotation are to be selected), the next scenes (in other words: the next sensor data set; in other words: a candidate data set for labelling) for annotation may be determined using one of the following methods.

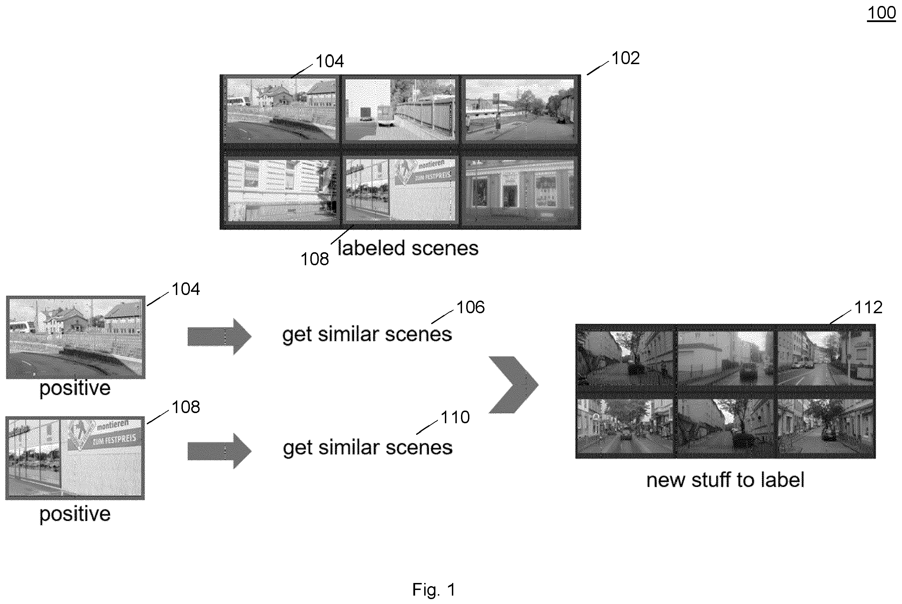

According to various embodiments, for each of the scenes marked as belonging to X ("positives"), their aggregated signature may be compared to all the aggregated signatures in the data collection, and the aggregated signatures in the data collection may be ranked by distance. The scenes in the data collection with the lowest distance from these "positive" scenes may be selected as the next candidates for annotation. This is also illustrated in Fig. 1.

Fig. 1 shows an illustration 100 of computer assisted labelling by proposing similar scenes according to various embodiments. A plurality of labelled scenes 102 may be provided, among which scenes 104 and 108 are positives, and the other scenes are not positives ("negatives"). Scenes similar to the positive scenes 106 and 108 may be determined by distance, to get similar scenes 106, 110. These similar scenes 106, 110 may be new scenes to label (112), i.e. candidate scenes for labelling (or candidate data sets for labelling).

According to various embodiments, all the scenes marked as belonging to X ("positives") and all the scenes marked as not belonging to X ("negatives") from all the previous annotation steps for this category may be provided as input data. A regression model may be trained using these "positives" and "negatives", for example in the following manner:
∘ The model accepts an aggregated signature as an input, and outputs a numeric value.
∘ Each of the "positives" is assigned a target value of 1, and each of the "negatives" is assigned a target value of -1.
∘ The model is trained (or fit) using both the positive and negative samples, with the target values set as the desired outputs.
∘ The model can be any machine model ranging from a simple linear regression model (which can easily be retrained in real-time) to a complex neural network (which may be slower but may potentially give better results).

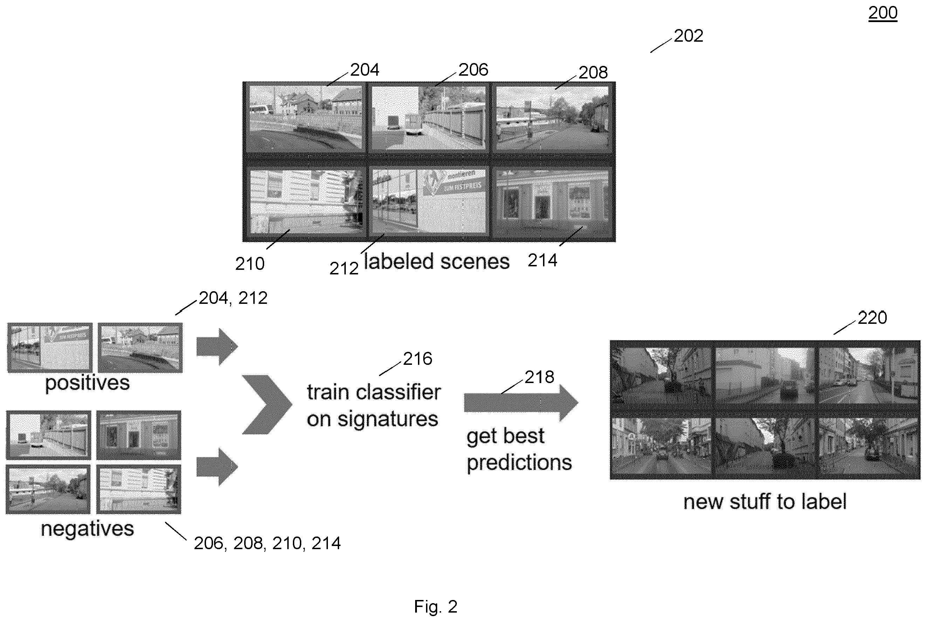

After the regression model is trained, the values of for all the aggregated signatures in the data collection may be predicted and all scenes in the data collection may be ranked by the predicted value. Then, the scenes with the highest predicted value may be selected as the next candidates for annotation. This is also illustrated in Fig. 2.

Fig. 2 shows an illustration 200 of computer assisted labelling by classifying signatures according to various embodiments. A plurality of labelled scenes 202 may be provided, among which scenes 204 and 212 are positives, and the other scenes 206, 208, 210, 214 are not positives ("negatives"). Both the positives 204, 212 and the negatives 206, 208, 210, 214 are used to train a classifier on signatures (216), and the best predictions 218 may be new scenes to label (220).

The methods illustrated in Fig. 1 and Fig. 2 may try to predict scenes similar to those that the annotators have already selected. After each batch of annotations is complete, the procedure may be re-applied to get the next candidates for annotation.

In most ML applications, it is desirable to annotate both positive and negative labels. If the method produces an overwhelming proportion of positive labels (which may be determined by the proportion of positives/negatives returned in each batch), the data may be re-balanced by mixing lower-ranking scenes as candidates in the next iteration of the method as illustrated in Fig. 1 or Fig. 2.

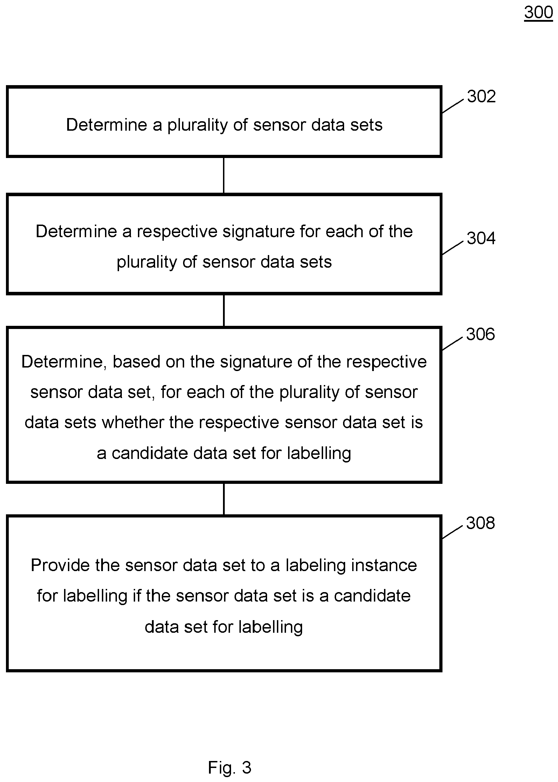

Fig. 3 shows a flow diagram 300 illustrating a method for determining candidate data sets for labelling according to various embodiments. At 302, a plurality of sensor data sets may be determined. At 304, a respective signature for each of the plurality of sensor data sets may be determined. At 306, it may be determined, based on the signature of the respective sensor data set, for each of the plurality of sensor data sets whether the respective sensor data set is a candidate data set for labelling. At 308, the sensor data set may be provided to a labeling instance for labelling if the sensor data set is a candidate data set for labelling.

According to various embodiments, the signature of a candidate data set may include or may be numeric information of reduced size compared to the candidate data set.

According to various embodiments, determining whether the respective sensor data set is a candidate data set may include or may be determining a similarity between the signature of the respective sensor data set and a signature of a labelled data set.

According to various embodiments, it may be determined whether the respective sensor data set is a candidate data set for labelling based on the similarity.

According to various embodiments, it may be determined whether the respective sensor data set is a candidate data set for labelling based on a machine learning method.

According to various embodiments, the machine learning method may include or may be a regression model.

According to various embodiments, the machine learning method may include or may be an artificial neural network.

According to various embodiments, the machine learning method may be trained using signatures of positive sensor data sets, or trained using signatures of negative sensor data sets, or trained using signatures of positive sensor data sets and signatures of negative sensor data sets.

According to various embodiments, the machine learning method may be configured to select sensor data sets which are suspected to be labelled positive with a higher probability than sensor data sets which are suspected to be labelled negative.

According to various embodiments, the sensor data set may include or may be image data, radar data, lidar data, or a combination thereof.

According to various embodiments, labelling may include or may be classification, preferably classification into positives and negatives. In other words, labelling may include or may be assigning a label, wherein the label indicates a result of classification (i.e. a class).

According to various embodiments, labelling may include or may be providing for data for training of an artificial neural network.

According to various embodiments, labelling may include or may be manual labelling.

Each of the steps 302, 304, 306, 308, 310 and the further steps described above may be performed by computer hardware components.

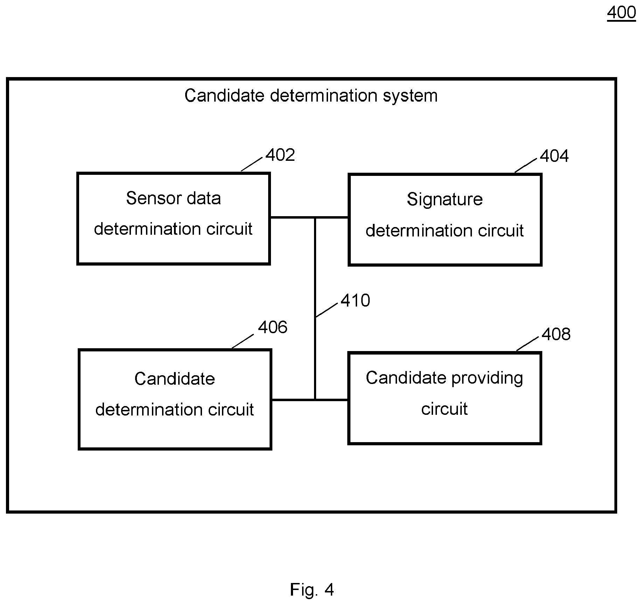

Fig. 4 shows a candidate determination system 400 according to various embodiments. The candidate determination system 400 may include a sensor data determination circuit 402, a signature determination circuit 404, a candidate determination circuit 406, and a candidate providing circuit 408.

The sensor data determination circuit 402 may be configured to determine a plurality of sensor data sets.

The signature determination circuit 404 may be configured to determine a respective signature for each of the plurality of sensor data sets.

The candidate determination circuit 406 may be configured to determine, based on the signature of the respective sensor data set, for each of the plurality of sensor data sets whether the respective sensor data set is a candidate data set for labelling.

The candidate providing circuit 408 may be configured to provide the sensor data set to a labeling instance for labelling if the sensor data set is a candidate data set for labelling.

The sensor data determination circuit 402, the signature determination circuit 404, the candidate determination circuit 406, and the candidate providing circuit 408 may be coupled with each other, e.g. via an electrical connection 410, such as e.g. a cable or a computer bus or via any other suitable electrical connection to exchange electrical signals.

A "circuit" may be understood as any kind of a logic implementing entity, which may be special purpose circuitry or a processor executing a program stored in a memory, firmware, or any combination thereof.

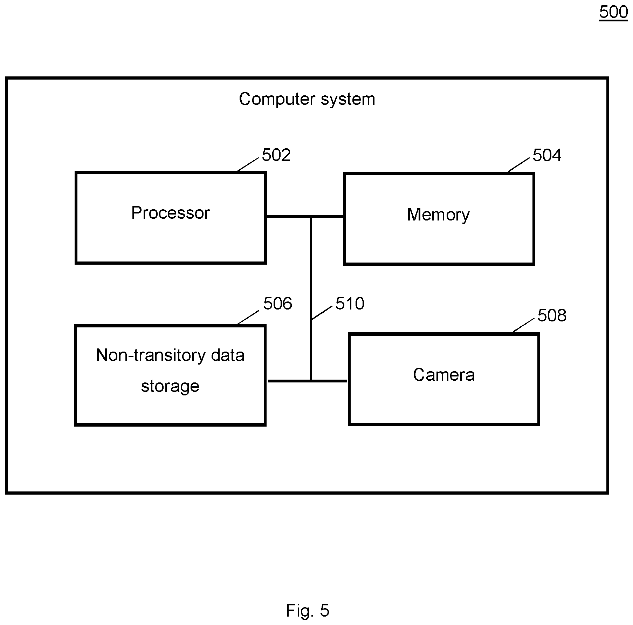

Fig. 5 shows a computer system 500 with a plurality of computer hardware components configured to carry out steps of a computer implemented method for determining candidate data sets for labelling according to various embodiments. The computer system 500 may include a processor 502, a memory 504, and a non-transitory data storage 506. A camera 508 may be provided as part of the computer system 500 (like illustrated in Fig. 5), or may be provided external to the computer system 500.

The processor 502 may carry out instructions provided in the memory 504. The non-transitory data storage 506 may store a computer program, including the instructions that may be transferred to the memory 504 and then executed by the processor 502. The camera 508 may be used for determining a sensor data set.

The processor 502, the memory 504, and the non-transitory data storage 506 may be coupled with each other, e.g. via an electrical connection 510, such as e.g. a cable or a computer bus or via any other suitable electrical connection to exchange electrical signals. The camera 508 may be coupled to the computer system 500, for example via an external interface, or may be provided as parts of the computer system (in other words: internal to the computer system, for example coupled via the electrical connection 510).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the candidate determination system 400 and/or for the computer system 500.

### Reference numeral list

- 100: illustration of computer assisted labelling by proposing similar scenes according to various embodiments
- 102: plurality of labelled scenes
- 104: positive
- 106: similar scene
- 108: positive
- 110: similar scene
- 112: new scenes to label

- 200: illustration of computer assisted labelling by classifying signatures according to various embodiments
- 202: plurality of labelled scenes
- 204: positive
- 206: negative
- 208: negative
- 210: negative
- 212: positive
- 214: negative
- 216: training a classifier on signatures
- 218: best predictions
- 220: new scenes to label

- 300: flow diagram illustrating a method for determining candidate data sets for labelling according to various embodiments.
- 302: step of determining a plurality of sensor data sets
- 304: step of determining a respective signature for each of the plurality of sensor data sets
- 306: step of determining, based on the signature of the respective sensor data set, for each of the plurality of sensor data sets whether the respective sensor data set is a candidate data set for labelling
- 308: step of providing the sensor data set to a labeling instance for labelling if the sensor data set is a candidate data set for labelling

- 400: candidate determination system
- 402: sensor data determination circuit
- 404: signature determination circuit
- 406: candidate determination circuit
- 408: candidate providing circuit
- 410: connection

- 500: computer system according to various embodiments
- 502: processor
- 504: memory
- 506: non-transitory data storage
- 508: camera
- 510: connection

## Claims

1. Computer implemented method for determining candidate data sets for labelling,
the method comprising the following steps carried out by computer hardware components:
- determining (302) a plurality of sensor data sets;
- determining (304) a respective signature for each of the plurality of sensor data sets;
- determining (306), based on the signature of the respective sensor data set, for each of the plurality of sensor data sets whether the respective sensor data set is a candidate data set for labelling; and
- providing (308) the sensor data set to a labeling instance for labelling if the sensor data set is a candidate data set for labelling.

2. The computer implemented method of claim 1,
wherein the signature of a candidate data set comprises numeric information of reduced size compared to the candidate data set.

3. The computer implemented method of any one of claims 1 to 2,
wherein determining whether the respective sensor data set is a candidate data set comprises determining a similarity between the signature of the respective sensor data set and a signature of a labelled data set.

4. The computer implemented method of claim 3,
wherein it is determined whether the respective sensor data set is a candidate data set for labelling based on the similarity.

5. The computer implemented method of any one of claims 1 to 4,
wherein it is determined whether the respective sensor data set is a candidate data set for labelling based on a machine learning method.

6. The computer implemented method of claim 5,
wherein the machine learning method comprises a regression model.

7. The computer implemented method of any one of claims 5 or 6,
wherein the machine learning method comprises an artificial neural network.

8. The computer implemented method of any one of claims 5 to 7,
wherein the machine learning method is trained using signatures of positive sensor data sets, or trained using signatures of negative sensor data sets, or trained using signatures of positive sensor data sets and signatures of negative sensor data sets.

9. The computer implemented method of any one of claims 5 to 8,
wherein the machine learning method is configured to select sensor data sets which are suspected to be labelled positive with a higher probability than sensor data sets which are suspected to be labelled negative.

10. The computer implemented method of any one of claims 1 to 9,
wherein the sensor data set comprises image data, radar data, lidar data, or a combination thereof.

11. The computer implemented method of any one of claims 1 to 10,
wherein labelling comprises classification, preferably classification into positives and negatives.

12. The computer implemented method of any one of claims 1 to 11,
wherein labelling comprises providing for data for training of an artificial neural network.

13. The computer implemented method of any one of claims 1 to 12,
wherein labelling comprises manual labelling.

14. Computer system, the computer system comprising a plurality of computer hardware components configured to carry out steps of the computer implemented method of at least one of claims 1 to 13.

15. Non-transitory computer readable medium comprising instructions for carrying out the computer implemented method of at least one of claims 1 to 13.
